# EUROPÄISCHE PATENTSCHRIFT

(11) **EP 2 614 244 B1**
(45) Veröffentlichungstag und Bekanntmachung des Hinweises auf die Patenterteilung: **25.05.2022**
(21) Anmeldenummer: 11754315.7
(22) Anmeldetag: 01.08.2011
(51) Int. Cl.: F02D 35/02, F02D 41/22, F02D 41/26, G01D 3/08, G05B 9/03

(54) **VERFAHREN UND VORRICHTUNG ZUR EINSTELLUNG EINES NOTLAUFBETRIEBES BEI EINEM FEHLERBEHAFTETEN SYSTEM ZUR ERKENNUNG VON VORENTFLAMMUNGEN IN EINEM VERBRENNUNGSMOTOR**
METHOD AND DEVICE FOR SETTING AN EMERGENCY OPERATIONAL MODE IN A SYSTEM WHICH DETECTS PRE-IGNITIONS IN A COMBUSTION ENGINE, AND WHICH CONTAINS ERRORS
PROCÉDÉ ET DISPOSITIF DE RÉGLAGE D'UN FONCTIONNEMENT DE SECOURS, EN CAS D'UN SYSTÈME DÉFECTUEUX POUR LA DÉTECTION DE PRÉALLUMAGES DANS UN MOTEUR À COMBUSTION INTERNE

(30) Priorität: 06.09.2010 DE 102010040271
(43) Veröffentlichungstag der Anmeldung: 17.07.2013
(73) Patentinhaber: Robert Bosch GmbH, 70442 Stuttgart (DE)
(72) Erfinder: WUERTH, Juergen, 71691 Freiberg (DE); KLUTH, Carsten, 70469 Stuttgart (DE); HAEMING, Werner, 74861 Neudenau (DE); LUO, Li, 71634 Ludwigsburg (DE)
(86) Internationale Anmeldenummer: PCT/EP2011/063200
(87) Internationale Veröffentlichungsnummer: WO 2012/031829

(56) Entgegenhaltungen:
- EP-A1- 0 379 074
- WO-A1-2005/061296
- DE-A1- 10 351 278
- DE-A1- 19 744 039
- DE-A1-102004 057 282
- DE-A1-102006 053 483

## Beschreibung

### Stand der Technik

Die Erfindung betrifft ein Verfahren zur Erkennung eines Notlaufbetriebes bei einem fehlerbehafteten System zur Erkennung von Vorentflammungen in einem Verbrennungsmotor, wobei zur Erkennung eines Fehlers das System, bestehend aus mindestens einem Sensor und/oder mindestens einer Sensorleitung und/oder einer Sensorsignalauswerteeinrichtung, einer Diagnose unterworfen wird, sowie eine Vorrichtung zur Durchführung des Verfahrens.

In einem Verbrennungsmotor führt eine Verbrennung des zugeführten Kraftstoff-Luft-Gemisches dazu, das Fahrzeug in den Fahrbetrieb zu versetzen bzw. den Fahrbetrieb aufrecht zu erhalten. Dabei wird die Verbrennung des Kraftstoff-Luft-Gemisches durch den Zündfunken einer Zündkerze eingeleitet. Der Zündfunken baut eine Flammenfront auf, welche sich im gesamten Brennraum des Verbrennungsmotors ausbreitet und das vorhandene Kraftstoff-Luft-Gemisch während der Verbrennung in kinetische Energie umwandelt. Bei klopfenden Verbrennungen läuft ein Teil der Verbrennungen schlagartig ab und verursacht im Brennraum des Verbrennungsmotors einen starken Druckanstieg, der eine Druckwelle erzeugt, die sich ausbreitet und auf die den Brennraum begrenzenden Wände trifft, wo die hochfrequenten Schwingungen in Körperschall umgewandelt werden. Diese Schwingungen werden durch Klopfsensoren (Körperschallsensoren) detektiert und bei der Ansteuerung des Verbrennungsmotors durch eine Klopfregelung berücksichtigt, um Motorschäden zu verhindern. Der Verbrennungsmotor wird dabei wirkungsgradoptimal immer an der Klopfgrenze betrieben. Mit Hilfe der Klopfregelung werden Beschädigungen des Verbrennungsmotors durch die immer wiederkehrenden klopfenden Verbrennungen vermieden.

Neben den beschriebenen klopfenden Verbrennungen treten aber auch Selbstentflammungen auf, die durch heiße Stellen im Brennraum, Öltröpfchen oder heiße Restgaszonen im Kraftstoff-Luft-Gemisch verursacht werden. Solche Selbstentflammungen können als Vorentflammungen vor dem Auftreten des Zündfunkens und als Nachentflammungen nach dem Auftreten des Zündfunkens vorkommen. Dabei entstehen neben der zündfunkeninduzierten Flammenfront eine oder mehrere weitere Flammenfronten. Diese Selbstentflammungen werden üblicherweise als Vorentflammungen bezeichnet und erhöhen die Gefahr von klopfenden Verbrennungen im Endgasbereich. Die dabei auftretenden Körperschwallschwingungen zeichnen sich durch extreme Druckamplituden aus, welche sehr schnell zu Motorschäden führen können.

Durch Auswertung der Signale des Klopfsensors wird der Verbrennungsmotor dahingehend überwacht, ob unkontrollierte Verbrennungen auftreten. Zur Unterbindung dieser unkontrollierten Verbrennungen werden Gegenmaßnahmen eingeleitet, die das Auftreten dieser Vorentflammungen verhindern, da der Motor vor diesen Vorentflammungen geschützt werden muss. Dabei reicht es nicht aus, wie bei der Klopfregelung, den Zündwinkel nach spät zu verstellen, da die Selbstentflammung nicht vom Zündfunken beeinflusst wird. Deshalb sind andere Maßnahmen, wie z.B. die Füllungsabsenkung im Brennraum des Verbrennungsmotors notwendig, die die Gemischtemperatur im Brennraum absenken.

Ein solcher Pfad für die Vorentflammungen schließt neben dem Klopfsensor als weitere Hardware mindestens eine Sensorleitung und eine Sensorsignalauswerteeinrichtung ein. Tritt bei einem der Hardwarelemente aber ein Fehler auf, so führt das Signal zur Erkennung der Vorentflammungen zu einem falschen Ergebnis. Die daraus resultierenden Maßnahmen zur Unterbindung der Vorentflammungen können dabei eine Beschädigung des Motors nicht verhindern, da sie unter falschen Voraussetzungen eingeleitet wurden. Aus diesem Grund werden die Hardwareelemente wie der Klopfsensor, Sensorleitung und Sensorsignalauswerteeinrichtung einer ständigen Diagnose unterzogen.

Aus der DE 10 2004 057 282 A1 ist bereits ein Verfahren zur Beurteilung einer Verbrennung mittels lonenstrommessung bekannt, durch dass insbesondere ein Klopfen erkannt wird. Aus der DE 103 51 278 A1 ist bereits eine Erkennung von klopfenden Verbrennungen bekannt.

### Offenbarung der Erfindung

Der Erfindung liegt somit die Aufgabe zugrunde, ein Verfahren und eine Vorrichtung zur Einstellung eines Notlaufbetriebes bei einem fehlerbehafteten System zur Erkennung von Vorentflammungen in einem Verbrennungsmotor anzugeben, welche zuverlässig die Beschädigung des Verbrennungsmotors bei fehlerhafter Hardware verhindern.

Erfindungsgemäß wird die Aufgabe dadurch gelöst, dass bei Feststellung eines Fehlers des Systems durch die Diagnose ein üblicher Pfad mit Sensorsignalerfassung, Sensorsignalauswertung, Erkennung der unkontrollierten Verbrennungen sowie Einleitung von Gegenmaßnahmen gegen die Vorentflammungen unterbrochen wird und als Notlaufbetrieb ein Sicherheitspfad aktiviert wird. Das hat den Vorteil, dass alle Verbindungen zum Verbrennungsmotor, welche aufgebaut werden, wenn die Erkennung der Vorentflammungen fehlerfrei arbeitet, unterbrochen werden. Es wird ein separater Sicherheitspfad aufgebaut, mittels welchem der Verbrennungsmotor hinsichtlich der Unterbindung von Vorentflammungen in einen Notlaufbetrieb überführt wird. Somit wird auch jede übliche Verbindung zum Verbrennungsmotor unterbunden, wodurch dessen Schutz gewährleistet wird. In diesem Notlaufbetrieb, bei dem die Erkennung von Vorentflammungen nicht mehr möglich ist, wird zum Schutz des Verbrennungsmotors eine Notlaufmaßnahme eingeleitet, die sicher verhindert, dass noch weitere Vorentflammungen auftreten. Dabei werden im Sicherheitspfad Maßnahmen aktiviert, die das Entstehen von Vorentflammungen im Verbrennungsmotor sicher unterbinden. Durch solche Maßnahmen wird grundsätzlich immer gewährleistet, dass Vorentflammungen unterbunden werden, auch wenn keine eindeutigen Messsignale auf das Vorhandensein oder das Entstehen von Vorentflammungen hinweisen. Der Verbrennungsmotor wird dabei in einen Zustand versetzt, der Vorentflammungen nicht zulässt. Dabei wird zur Unterbindung des Entstehens von Vorentflammungen eine Temperatur in einem Brennraum des Verbrennungsmotors abgesenkt. Dies hat den Vorteil, dass die schlagartige und extrem motorschädigende Energieumsetzung im Brennraum reduziert oder ganz verhindert wird. Dadurch werden heiße Stellen im Brennraum oder Hotspots im Kraftstoff-Luft-Gemisch abgekühlt und somit das Auftreten von Vorentflammungen verhindert.

In einer Variante wird die Temperatur in dem Brennraum des Verbrennungsmotors durch eine Kraftstoffanreicherung im Verbrennungsmotor abgesenkt. Durch die Anfettung des Kraftstoff-Luft-Gemisches, welches sich im Brennraum des Verbrennungsmotors befindet, ist die Brennfähigkeit durch die nahezu konstante Luftmasse begrenzt. Außerdem wird durch die auftretende Verdampfung der größeren Kraftstoffmenge das Kraft-Luft-Gemisch stärker abgekühlt.

In einer anderen Ausgestaltung wird die Temperatur in dem Brennraum des Verbrennungsmotors durch eine Luftanreicherung im Verbrennungsmotor abgesenkt. Hierbei wirkt die Luftmenge, die an der Verbrennung nicht teilnimmt, als kühlend. Ebenfalls führt das Magergemisch zu einer langsameren Durchbrennung des Kraftstoff-Luft-Gemisches, so dass sich Vorentflammungen weniger stark auf den Verbrennungsmotor auswirken.

In einer weiteren Variante wird die Temperatur in dem Brennraum des Verbrennungsmotors durch eine Absenkung der Füllung des Benzinmotors durch eine Reduzierung der Luftzufuhr vermindert. Dies erfolgt durch Bewegung der Drosselklappe in Richtung des Schließzustandes, wodurch ein weiteres Eindringen von Luft in den Verbrennungsmotor unterbunden und somit die Verbrennung reduziert wird, was sich auch auf die Vorentflammungen infolge niedrigerer Temperaturen positiv auswirkt.

Vorteilhafterweise wird die Temperatur in dem Brennraum des Verbrennungsmotors durch die Reduzierung eines inneren Restgases in dem Verbrennungsmotor durch geringe Überschneidung der Ansteuerzeiten der Einlass- und der Auslassventile des Verbrennungsmotors vermindert. Voraussetzung für diese Verstellungen sind verstellbare Nockenwellen. Hierbei muss zumindest eine Nockenwelle für die Einlass- oder die Auslassventile verstellbar sein. Es ist vorteilhaft, wenn beide Nockenwellen verstellbar sind und damit die Steuerzeiten für die Einlass- und Auslassventile verstellbar werden. Diese Vorgehensweise ermöglicht eine sehr vielseitige Reaktion auf Vorentflammungen, da sich die Überschneidungen schnell softwaremäßig einstellen lassen. Da das Einlassventil erst öffnet wird, während das Auslassventil schon geschlossen ist, wird das Temperaturniveau im Brennraum des Verbrennungsmotors abgesenkt. Bei der Überschneidungsreduzierung der Ansteuerzeiten kann von den Maximalanschlägen des Einlass- oder Auslassventils ausgegangen werden oder nur bestimmte Öffnungszustände der Ventile berücksichtigt werden.

In einer Weiterbildung wird zur Diagnose des Sensors ein normierter Referenzpegel gebildet, der zur Fehlererkennung mit einem oberen und einem unteren Schwellwert verglichen wird, wobei auf einen Fehler erkannt wird, wenn das Sensorsignal außerhalb des durch den oberen und den unteren Schwellwert gebildeten Signalbandes über der Drehzahl liegt. Diese Diagnose ist sehr einfach durchzuführen und benötigt nur eine Änderung in der Software. Auf den Einsatz von zusätzlicher Hardware kann verzichtet werden.

Insbesondere wird zur Diagnose der Sensorleitung eine Kurzschlussprüfung durchgeführt und bei Vorliegen eines Kurzschlusses der Sensorleitung zu einer Batteriespannung oder einer Masse ein Fehler erkannt. Auch diese Diagnosemaßnahme ist sehr einfach während des Betriebes des Verbrennungsmotors durchführbar.

In einer Weiterbildung erfolgt die Diagnose der Sensorsignalauswerteeinrichtung durch Überwachung der Rechner-Hardware hinsichtlich Signalerfassung und Signalauswertung, wobei ein Fehler erkannt wird, wenn Unplausibilitäten während der Signalerfassung oder Signalauswertung auftreten. Auch diese Diagnose wird während des Betriebs der Sensorsignalauswerteeinrichtung durchgeführt, was zu einer schnellen Erkennung des Fehlers der Sensorsignalauswerteeinrichtung führt.

In einer weiteren Ausführungsform wird der Fehler zur Auswertung in einer Werkstatt in einen Fehlerspeicher abgespeichert. Damit lassen sich auch nachträglich noch die Fehler beheben, welche während des Betriebs des Verbrennungsmotors erkannt wurden.

Eine Weiterbildung der Erfindung betrifft eine Vorrichtung zur Einstellung eines Notlaufbetriebes bei einem fehlerbehafteten System zur Erkennung von Vorentflammungen in einem Verbrennungsmotor, wobei zur Erkennung eines Fehlers das System, bestehend aus mindestens einem Sensor und einer Sensorleitung und einer Sensorsignalauswerteeinrichtung, einer Diagnose unterworfen wird. Um eine Beschädigung des Verbrennungsmotors bei gestörter Erkennung der Vorentflammungen zu verhindern, sind Mittel vorhanden, welche bei Feststellung eines Fehlers des Systems durch die Diagnose einen üblichen Pfad mit Sensorsignalerfassung, Sensorsignalauswertung, Erkennung der Vorentflammungen sowie Einleitung von Gegenmaßnahmen gegen die Vorentflammungen unterbrechen oder ganz oder teilweise abschalten und als Notlaufbetrieb einen Sicherheitspfad aktivieren. Dadurch, dass der üblicherweise zur Erkennung der Vorentflammungen genutzte Pfad vollständig abgeschaltet wird, wird gewährleistet, dass keine Motorschäden beim Verbrennungsmotor auftreten, da im Sicherheitspfad nur Maßnahmen angeregt werden, die in jedem Falle das Auftreten von Vorentflammungen unterbinden.

Vorteilhafterweise umfassen die Mittel eine Steuer- und Auswerteeinrichtung für den Verbrennungsmotor, welche Signale für eine Diagnose des mindestens einen Sensors und/oder der mindestens einen Sensorleitung und/oder der Sensorsignalauswerteeinrichtung auslöst und die in Abhängigkeit von diesen Signalen empfangenen Antwortsignale auswertet, wobei bei der Erkennung eines Fehlers der übliche Pfad (26) mit Sensorsignalerfassung, Sensorsignalauswertung, Erkennung der unkontrollierten Verbrennungen sowie Einleitung von Gegenmaßnahmen gegen die Vorentflammungen unterbricht und den Sicherheitspfad aktiviert . Eine solche Abschaltung des üblichen Pfades und die Aktivierung des Sicherheitspfades lassen sich einfach in der Software der Steuer- und Auswerteeinrichtung realisieren. Die Aktivierung eines separaten Sicherheitspfades garantiert, dass bei der Erkennung eines fehlerbehafteten Systems nur solche Maßnahmen an dem Verbrennungsmotor ausgeführt werden, die die Sicherheit und den Schutz des Verbrennungsmotors zuverlässig garantieren.

In einer Variante ist der Sensor ein am Zylinder des Verbrennungsmotors angeordneter Klopfsensor, ein im Brennraum des Verbrennungsmotors angeordneter Drucksensor oder ein die Drehzahl der Kurbelwelle des Verbrennungsmotors detektierender Drehzahlsensor. Mittels dieser verschiedenen Sensoren können unkontrollierte Verbrennungen zuverlässig erkannt werden. Dabei werden die Vorentflammungen bei der Verwendung des Drucksensors direkt detektiert, während die Anwendung des Klopfsensors bzw. die Detektion über die Drehzahlinformation eine indirekte Erkennung der Vorentflammungen nach sich zieht.

In einer Ausgestaltung, weist jeder Zylinder des Verbrennungsmotors als Aktoren ein Einlassventil zum Einlass der Luft und ein Auslassventil zur Ausgabe eines Verbrennungsabgases auf, deren Öffnungszeiten von jeweils einer Nockenwelle eingestellt wird, wobei die Steuer- und Auswerteeinrichtung die Nockenwellen so ansteuert, dass sich die Öffnungszeiten des Einlass- und des Auslassventils nicht oder nur gering überschneiden. Durch die Überschneidungsreduzierung der Ventilöffnungszeiten wird das sich im Brennraum des Verbrennungsmotors befindliche innere Restgas reduziert, wodurch das Temperaturniveau im Brennraum abgesenkt wird. Die weniger überschneidende Ansteuerung des Einlass- und des Auslassventils eines Zylinders stellt dabei eine einfache softwaremäßige Maßnahme dar.

Die Erfindung lässt zahlreiche Ausführungsformen zu. Eines davon soll anhand der in der Zeichnung dargestellten Figuren näher erläutert werden.

Es zeigt:
- Figur 1:: Vorrichtung zur Erfassung und Reduzierung unkontrollierter Verbrennungen in einem Verbrennungsmotor.
- Figur 2:: Prinzipdarstellung eines Zylinders des Verbrennungsmotors nach Figur 1
- Figur 3:: Pfade zur Ansteuerung des Verbrennungsmotors bei unkontrollierten Verbrennungen

Gleiche Merkmale sind mit gleichen Bezugszeichen gekennzeichnet.

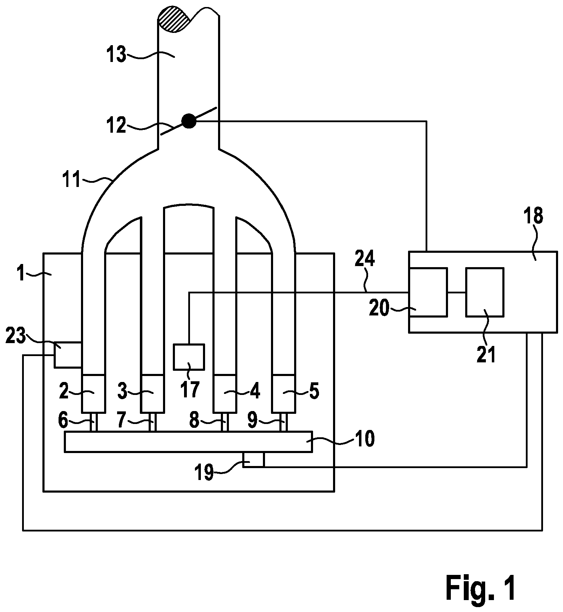

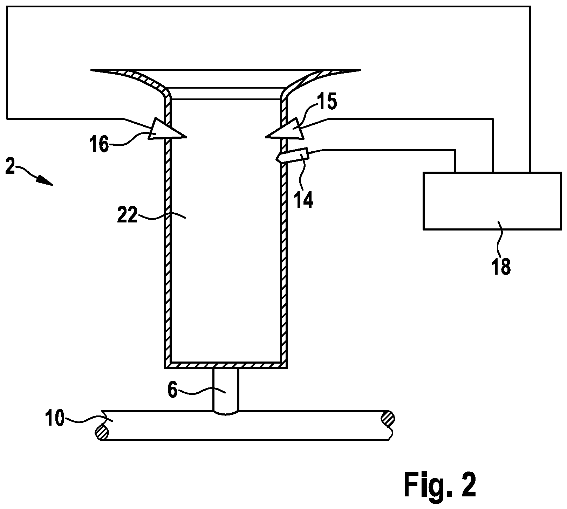

Figur 1 zeigt eine Vorrichtung zur Erfassung und Auswertung einer Verbrennung in einem Verbrennungsmotor 1. Der Verbrennungsmotor 1 weist in diesem Beispiel vier Zylinder 2, 3, 4, 5 auf, deren nicht weiter dargestellte Kolben, welche sich in den Zylindern 2, 3, 4, 5 bewegen, über jeweils eine Pleuelstange 6, 7, 8, 9 mit der Kurbelwelle 10 verbunden sind und diese aufgrund der durch die Verbrennungen verursachten Druckänderungen antreiben. Die Zylinder 2, 3, 4, 5 sind mit einem Saugrohr 11 verbunden, welches durch eine Drosselklappe 12 gegenüber einem Luftansaugrohr 13 abgeschlossen ist. In jedem Zylinder 2, 3, 4, 5 ragt eine Düse 14 zur Einspritzung von Kraftstoff, wodurch sich ein Kraftstoff-Luft-Gemisch bildet. Darüber hinaus weist jeder Zylinder 2, 3, 4, 5 ein Einlassventil 15 für die Frischluft und ein Auslassventil 16 für die Abgase, die während des Verbrennungsprozesses entstehen, auf, wie es in Figur 2 beispielhaft nur für den Zylinder 2 dargestellt ist. Das Einlassventil 15 wird von einer Einlassnockenwelle und das Auslassventil 16 von einer Auslassnockenwelle betrieben, welche der Übersichtlichkeit halber nicht weiter dargestellt sind.

An dem Verbrennungsmotor 1 ist ein Klopfsensor 17 angeordnet, welcher die Körperschallschwingungen des Verbrennungsmotors 1 detektiert, welche durch die Verbrennungen im Verbrennungsmotor 1 verursacht werden. Die Signale des Klopfsensors 17 werden an ein Steuergerät 18 weitergeleitet, welches auch mit einem, der Kurbelwelle 10 gegenüberliegenden Kurbelwellensensor 19 verbunden ist, wobei das Steuergerät 18 die Verbrennungen dem Signal des Kurbelwellensensor 19 zuordnet, welches einen Kurbelwellenwinkel präsentiert. Das Steuergerät 18 umfasst eine Sensorauswerteeinrichtung 20, die mit einem Speicher 21 verbunden ist.

Weiterhin ist das Steuergerät 18 mit der Drosselklappe 12 und mit der Kraftstoffeinspritzdüse 14 sowie dem Einlassventil 15 und dem Auslassventil 16 jedes Zylinders 2, 3, 4, 5 über die Nockenwellenverstellung verbunden. Zur Erkennung des ersten Zylinders ist ein Phasensensor 23 an dem ersten Zylinder 2 angebracht, welcher ebenfalls mit dem Steuergerät 18 verbunden ist.

Beim Öffnen der Drosselklappe 12 strömt die Frischluft in das Saugrohr 11, welches über das Einlassventil 15 in den Zylinder 2, 3, 4, 5 eingeführt wird. Weiterhin wird in die Zylinder 2, 3, 4, 5 von der jeweiligen Kraftstoffeinspritzdüse 14 Kraftstoff injiziert. Durch einen von einer nicht weiter dargestellten Zündkerze ausgelösten Funken wird in den Zylindern 2, 3, 4, 5 nacheinander eine Verbrennung initiiert, welche einen Druckanstieg im Zylinder 2, 3, 4, 5 auslöst, der über den Kolben und die Pleuelstange 6, 7, 8, 9 auf die Kurbelwelle 10 übertragen wird und diese in Bewegung setzt. Neben den kontrollierten Verbrennungen, welche in der Regel klopffrei sind und nur vereinzelt auch klopfend sein können, treten Verbrennungen auf, die einen sehr frühen Brennbeginn bzw. Verbrennungslagen aufweisen. Diese Verbrennungen werden als Vorentflammungen bezeichnet. Eine solche Vorentflammung weist im Vergleich zu Normalverbrennungen wesentlich höhere Drücke und Temperaturen auf, die schädigend für den Verbrennungsmotor sind. Zur Erkennung und zur Verminderung der Vorentflammungen ist in dem Steuergerät 18 ein Signalauswertepfad zur Erkennung der Vorentflammungen eingerichtet. Dabei werden die Signale des Klopfsensors 17, die infolge der durch die Verbrennung verursachten Körperschallschwingungen auftreten, kontinuierlich oder in vorgegebenen zeitlichen Abständen ausgewertet. Diese Ausgangssignale des Klopfsensors 17 werden von dem Steuergerät 18 in Relation zu dem von dem Kurbelwellensensor 19 ausgegebenen Kurbelwellenwinkel gesetzt. Dadurch können die klopfenden Verbrennungen jeweils den Zylindern 2, 3, 4, 5 zugeordnet werden, in welchen die Verbrennungen ablaufen.

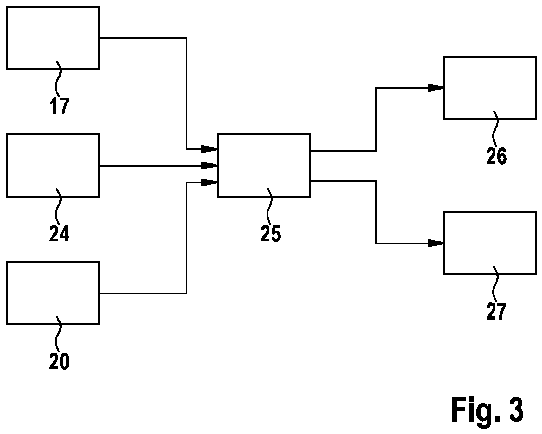

Um sicherzugehen, dass die notwendige Hardware zur Erkennung der Vorentflammungen auch immer zuverlässig arbeitet, wird diese in regelmäßigen Abständen einer Diagnose unterzogen. Zu dieser Hardware zählt neben dem Klopfsensor 17 die Sensorleitung 24, welche den Klopfsensor 17 mit dem Steuergerät 18 verbindet und das Steuergerät 18 als Signalauswerteeinheit selbst. Die Diagnose erfolgt dabei mittels eines Softwareprogramms und beinhaltet einen Logikblock 25. Dieser Logikblock 25 ist in Figur 3 dargestellt.

Zur Diagnose eines Sensorfehlers wird ein Signalband aus einem oberen und einem unteren Schwellwert gebildet, wobei ein intaktes Signal des Klopfsensors 17 innerhalb des Signalbandes liegen muss. Liegt dieses von dem Klopfsensor 17 gelieferte Signal außerhalb des Signalbandes, wird ein Fehler erkannt.

Die Sensorleitung 24 selbst wird dahingehend einer Diagnose unterzogen, indem eine Kurzschlussprüfung der Leitung 24 durchgeführt wird. Bei einer solchen Kurzschlussprüfung wird festgestellt, ob die Sensorleitung 24 einen Kurzschluss entweder nach Masse oder zu einer Batteriespannung aufweist. Ist dies der Fall, wird dies im Logikblock 25 ebenfalls als Fehler registriert und im Speicher 21 abgespeichert.

Zur Diagnose der Sensorsignalauswerteeinrichtung 20 wird die Rechner-Hardware der Sensorsignalauswerteeinrichtung 20 hinsichtlich Signalerfassung und Signalauswertung überwacht, wobei ein Fehler erkannt wird, wenn Unplausibilitäten während der Signalerfassung oder Signalauswertung aufgetreten sind.

Auch dieser Fehler wird im Logikblock 25 der Überwachungssoftware im Speicher 21 abgespeichert. Die im Speicher 21 abgespeicherten Fehler können jederzeit in einer Werkstatt zu weiteren Diagnosezwecken ausgegeben und ausgewertet werden.

Wurde nun in einem der drei Diagnosefälle ein Fehler erkannt, so wird der übliche Pfad 26, wie er bisher zum Verbrennungsmotor 1 bestanden hat, abgeschaltet. Diese Abschaltung kann einmal dadurch erfolgen, dass die Erkennung der Vorentflammungen durch die Sensorsignalauswerteeinrichtung 20 im Steuergerät 18 unterbrochen wird. Damit wird sichergestellt, dass keinerlei Maßnahmen zur Unterdrückung von Vorentflammungen durchgeführt werden. Neben der Abschaltung der Erkennung der Vorentflammungen ist es aber auch möglich, dass alle Gegenmaßnahmen zur Unterbindung von Vorentflammungen beendet werden. Auch diese Maßnahme stellt sicher, dass die Aktoren 12, 14, 15, 16 des Verbrennungsmotors 1 keinerlei Aufforderung für weitere Aktivitäten über den üblichen Pfad 26 erhalten.

Im Fehlerfall wird ein zweiter, separater Sicherheitspfad 27 aktiviert, welcher Sicherheitsmaßnahmen zur Verhinderung der Beschädigung des Verbrennungsmotors 1 umfasst. Bei diesen Sicherheitsmaßnahmen handelt es sich um Vorgehensweisen, die sicherstellen, dass die Temperatur im Brennraum des Verbrennungsmotors stetig so niedrig gehalten wird, dass eine Entstehung von unkontrollierten Verbrennungen sicher unterbunden wird.

Um den Verbrennungsmotor 1 vor dem Entstehen von Vorentflammungen zu schützen, werden in dem Sicherheitspfad 27 unterschiedliche Maßnahmen zur Unterbindung der Vorentflammungen eingeleitet. Diese Maßnahmen können entweder einzeln oder in Kombination durchgeführt werden. Dazu gehören die Kühlung des Brennraumes 22 der Zylinder 2, 3, 4, 5 durch eine Kraftstoffanreichung oder eine Frischluftanreichung bzw. eine Füllungsabsenkung.

Besonders komfortabel lassen sich Vorentflammungen durch die Reduzierung des inneren Restgases im Zylinder 2, 3, 4, 5 vermindern. Dabei werden das Einlassventil 15 und das Auslassventil 16 durch ihre Nockenwellen so angetrieben, dass sich die Öffnungszeiten beider Ventile 15, 16 im Ladungswechsel-OT (oberer Totpunkt) nicht überschneiden. Die Nockenwellen werden dabei genauso, wie die Drosselklappe 12 zur Verminderung der Luftzufuhr und das Kraftstoffeinspritzventil 14 von dem Steuergerät 18 angesteuert. Die reduzierte Ventilüberschneidung führt dazu, dass bei geschlossenem Auslassventil 16 das Einlassventil 15 erst geöffnet wird, wodurch sich das im Zylinder 2, 3, 4, 5 befindliche Restgas reduziert und das Temperaturniveau im Zylinder 2, 3, 4, 5 sinkt. Ist nur die Einlassnockenwelle variabel verstellbar, dann wird die Steuerzeit für die Einlassventile 15 nach spät verstellt. Das heißt die Einlassventile 15 öffnen erst, wenn der Kolben des jeweiligen Zylinders 2, 3, 4, 5 den oberen Totpunkt OT, welcher den höchsten Punkt darstellt, den der Kolben im Zylinder 2, 3, 4, 5 erreichen kann, bereits überschritten hat und sich schon wieder in einer Abwärtsbewegung befindet. Hat der Verbrennungsmotor 1 nur verstellbare Auslassventilsteuerzeiten, dann wird die Steuerzeit der Auslassventile nach früh verstellt, also bevor der Kolben des Zylinders 2, 3, 4, 5 in seiner Aufwärtsbewegung den oberen Totpunkt OT erreicht. Sind sowohl die Einlassventile 15 als auch die Auslassventile variabel, dann wird die Steuerzeit der Auslassventile 16 nach früh und die der Einlassventile 15 nach spät verstellt. Man kann dabei sowohl die Maximalanschläge der Ventile 15, 16 berücksichtigen oder nur ein bestimmtes Δ in der Öffnung der Ventile 15, 16.

Für das Einleiten der Maßnahmen zur Unterbindung von Vorentflammungen durch das Steuergerät 18, bestehen im Sicherheitspfad 27 weitere Möglichkeiten. So kann in einer einfachen Variante eine oder mehrere der bereits diskutierten Möglichkeiten durch das Steuergerät 18 ausgelöst werden, indem es entweder die Kraftstoffeinspritzdüse 14 aktiviert und/oder die Drosselklappe 12 verstellt und/oder die Steuerzeiten des Einlassventils 15 und des Auslassventils 16 variiert.

## Patentansprüche

1. Verfahren zur Einstellung eines Notlaufbetriebes bei einem fehlerbehafteten System zur Erkennung von Vorentflammungen in einem Verbrennungsmotor, wobei zur Erkennung eines Fehlers das System, bestehend aus mindestens einem Sensor (17) und einer Sensorleitung (24) und einer Sensorsignalauswerteeinrichtung (20), einer Diagnose unterworfen wird, **dadurch gekennzeichnet, dass** bei Feststellung eines Fehlers des Systems (17, 24, 20) durch die Diagnose ein üblicher Pfad (26) mit Sensorsignalerfassung, Sensorsignalauswertung, Erkennung der Vorentflammungen sowie Einleitung von Gegenmaßnahmen gegen die Vorentflammungen unterbrochen oder ganz oder teilweise abgeschaltet wird und als Notlaufbetrieb ein Sicherheitspfad (27) aktiviert wird, dass im Sicherheitspfad (27) Maßnahmen aktiviert werden, die das Entstehen von Vorentflammungen im Verbrennungsmotor (1) sicher unterbinden, und dass zur Unterbindung des Entstehens von Vorentflammungen eine Temperatur in einem Brennraum des Verbrennungsmotors (1) abgesenkt wird.

2. Verfahren nach Anspruch 1, **dadurch gekennzeichnet, dass** die Temperatur in dem Brennraum des Verbrennungsmotors (1) durch eine Kraftstoffanreichung im Verbrennungsmotor (1) abgesenkt wird.

3. Verfahren nach Anspruch 1, **dadurch gekennzeichnet, dass** die Temperatur in dem Brennraum des Verbrennungsmotors (1) durch eine Luftanreichung im Verbrennungsmotor (1) abgesenkt wird.

4. Verfahren nach Anspruch 1, **dadurch gekennzeichnet, dass** die Temperatur in dem Brennraum des Verbrennungsmotors (1) durch eine Absenkung der Füllung des Verbrennungsmotors (1) durch eine Reduzierung der Luftzufuhr vermindert wird.

5. Verfahren nach Anspruch 1, **dadurch gekennzeichnet, dass** die Temperatur in dem Brennraum des Verbrennungsmotors (1) durch die Reduzierung eines inneren Restgases in dem Verbrennungsmotor (1) durch Überschneidungsreduzierung der Ansteuerzeiten eines Einlass- (15) und eines Auslassventils (16) des Verbrennungsmotors (1) vermindert wird.

6. Verfahren nach mindestens einem der vorhergehenden Ansprüche, **dadurch gekennzeichnet, dass** zur Diagnose des Sensors (17) aus dem Sensorsignal normierte Referenzpegel ermittelt werden, die zur Fehlererkennung mit einem oberen und einem unteren Schwellwert verglichen werden, wobei auf einen Fehler erkannt wird, wenn das Sensorsignal außerhalb des durch den oberen und den unteren Schwellwert gebildeten Signalbandes liegt.

7. Verfahren nach mindestens einem der vorhergehenden Ansprüche, **dadurch gekennzeichnet, dass** zur Diagnose der Sensorleitung (24) eine Kurzschlussprüfung durchgeführt wird und bei Vorliegen eines Kurzschlusses der Sensorleitung (24) zu einer Batteriespannung oder einer Masse ein Fehler erkannt wird.

8. Verfahren nach mindestens einem der vorhergehenden Ansprüche, **dadurch gekennzeichnet, dass** die Diagnose der Sensorsignalauswerteeinrichtung (20) durch Überwachung der Rechner-Hardware hinsichtlich Signalerfassung und Signalauswertung erfolgt, wobei ein Fehler erkannt wird, wenn Unplausibilitäten während der Signalerfassung oder Signalauswertung aufgetreten sind.

9. Verfahren nach mindestens einem der Ansprüche 6, 7 oder 8, **dadurch gekennzeichnet, dass** der Fehler zur Auswertung in einer Werkstatt in einen Fehlerspeicher abgespeichert wird.

10. Vorrichtung zur Einstellung eines Notlaufbetriebes bei einem fehlerbehafteten System zur Erkennung von Vorentflammungen in einem Verbrennungsmotor, wobei zur Erkennung eines Fehlers das System, bestehend aus mindestens einem Sensor (17) und mindestens einer Sensorleitung (24) und einer Sensorsignalauswerteeinrichtung (20), einer Diagnose unterworfen wird, **dadurch gekennzeichnet, dass** Mittel (18, 25) vorhanden sind, welche bei Feststellung eines Fehlers des Systems (17, 24, 20) durch die Diagnose einen üblichen Pfad (26) mit Sensorsignalerfassung, Sensorsignalauswertung, Erkennung der Vorentflammungen sowie Einleitung von Gegenmaßnahmen gegen die Vorentflammungen unterbrechen oder ganz oder teilweise abschalten, dass als Notlaufbetrieb einen Sicherheitspfad (27) aktivieren, in dem Maßnahmen aktiviert werden, die das Entstehen von Vorentflammungen im Verbrennungsmotor (1) sicher unterbinden, und dass zur Unterbindung des Entstehens von Vorentflammungen die Mittel eine Temperatur in einem Brennraum des Verbrennungsmotors (1) absenken.

11. Vorrichtung nach Anspruch 10, **dadurch gekennzeichnet, dass** die Mittel eine Steuer- und Auswerteeinrichtung (18) für den Verbrennungsmotor (1) umfassen, welche Signale für eine Diagnose des mindestens einen Sensors (17) und/oder der mindestens einen Sensorleitung (24) und/oder der Sensorsignalauswerteeinrichtung (20) auslöst und die in Abhängigkeit von diesen Signalen empfangenen Antwortsignale auswertet, wobei bei der Erkennung eines Fehlers der üblichen Pfad (26) zur Erkennung der Vorentflammungen unterbrochen und der Sicherheitspfad (27) aktiviert wird.

12. Vorrichtung nach Anspruch 10 oder 11, **dadurch gekennzeichnet, dass** der Sensor (17) ein am Zylinder des Verbrennungsmotors (1) angeordneter Klopfsensor, ein im Brennraum des Verbrennungsmotors (1) angeordneter Drucksensor oder ein die Drehzahl der Kurbelwelle des Verbrennungsmotors (1) detektierender Drehzahlsensor ist.

13. Vorrichtung nach Anspruch 10, 11 oder 12, **dadurch gekennzeichnet, dass** jeder Zylinder des Verbrennungsmotors (1) als Aktoren ein Einlassventil (15) zum Einlass der Luft und ein Auslassventil (16) zur Ausgabe eines Verbrennungsabgases aufweist, deren Öffnungszeiten von jeweils einer Nockenwelle eingestellt werden, wobei die Steuer- und Auswerteeinrichtung (18) die Nockenwelle so ansteuert, dass sich die Öffnungszeiten des Einlass- (15) und des Auslassventils (16) nicht oder nur gering überschneiden.

## Claims

1. Method for setting an emergency operational mode in a system which detects pre-ignition in a combustion engine and which contains errors, wherein, in order to detect an error, the system, which consists of at least one sensor (17) and a sensor cable (24) and a sensor signal evaluation device (20), is subjected to a diagnosis, **characterized in that**, if an error in the system (17, 24, 20) is detected by the diagnosis, a standard path (26), comprising sensor signal capture, sensor signal evaluation, detection of pre-ignition and initiation of measures to counter the pre-ignition, is interrupted or completed or partially switched off and a safety path (27) is activated as an emergency operational mode, **in that**, in the safety path (27), measures which reliably prevent the occurrence of pre-ignition in the combustion engine (1) are activated, and **in that**, in order to prevent the occurrence of pre-ignition, a temperature in a combustion chamber of the combustion engine (1) is lowered.

2. Method according to Claim 1, **characterized in that** the temperature in the combustion chamber of the combustion engine (1) is lowered by a fuel enrichment in the combustion engine (1).

3. Method according to Claim 1, **characterized in that** the temperature in the combustion chamber of the combustion engine (1) is lowered by an air enrichment in the combustion engine (1).

4. Method according to Claim 1, **characterized in that** the temperature in the combustion chamber of the combustion engine (1) is decreased by lowering the charging of the combustion engine (1) by reducing the air supply.

5. Method according to Claim 1, **characterized in that** the temperature in the combustion chamber of the combustion engine (1) is decreased by reducing an internal residual gas in the combustion engine (1) by reducing the overlap of the timing of an inlet (15) and an exhaust valve (16) of the combustion engine (1).

6. Method according to at least one of the preceding claims, **characterized in that**, in order to diagnose the sensor (17), standardized reference levels are determined from the sensor signal and are compared with an upper and a lower threshold value in order to detect an error, an error being detected if the sensor signal lies outside the signal band formed by the upper and the lower threshold value.

7. Method according to at least one of the preceding claims, **characterized in that**, in order to diagnose the sensor cable (24), a short-circuit test is carried out and, if a short circuit of the sensor cable (24) to a battery voltage or to an earth is present, an error is detected.

8. Method according to at least one of the preceding claims, **characterized in that** the diagnosis of the sensor signal evaluation device (20) is carried out by monitoring the computer hardware with respect to signal capture and signal evaluation, an error being detected if implausibilities have occurred during the signal capture or signal evaluation.

9. Method according to at least one of Claims 6, 7 or 8, **characterized in that** the error is stored in an error memory for evaluation in a workshop.

10. Device for setting an emergency operational mode in a system which detects pre-ignition in a combustion engine and which contains errors, wherein, in order to detect an error, the system, which consists of at least one sensor (17) and at least one sensor cable (24) and a sensor signal evaluation device (20), is subjected to a diagnosis, **characterized in that** means (18, 25) are present which, upon detection of an error in the system (17, 24, 20) by the diagnosis, interrupt or completely or partially switch off a standard path (26), comprising sensor signal capture, sensor signal evaluation, detection of pre-ignition and initiation of measures to counter pre-ignition, **in that** activate a safety path (27) as an emergency operational mode, measures which reliably prevent the occurrence of pre-ignition in the combustion engine (1) being activated in the safety path, and **in that**, in order to prevent the occurrence of pre-ignition, the means lower a temperature in a combustion chamber of the combustion engine (1).

11. Device according to Claim 10, **characterized in that** the means include a control and evaluation device (18) for the combustion engine (1) which triggers signals for a diagnosis of the at least one sensor (17) and/or the at least one sensor cable (24) and/or the sensor signal evaluation device (20) and evaluates the response signals received in dependence on these signals, the standard path (26) for detecting pre-ignition being interrupted and the safety path (27) being activated upon detection of an error.

12. Device according to Claim 10 or 11, **characterized in that** the sensor (17) is a knock sensor arranged on the cylinder of the combustion engine (1), a pressure sensor arranged in the combustion chamber of the combustion engine (1) or a rotational speed sensor detecting the rotational speed of the crankshaft of the combustion engine (1).

13. Device according to Claim 10, 11 or 12, **characterized in that** each cylinder of the combustion engine (1) has as actuators an inlet valve (15) for admitting air and an exhaust valve (16) for discharging a combustion waste gas, the opening times of which are set by a respective camshaft, the control and evaluation device (18) activating the camshaft in such a way that the opening times of the inlet (15) and exhaust valve (16) do not overlap or overlap only slightly.

## Revendications

1. Procédé de réglage du fonctionnement de secours en cas de défaillance d'un système de détection de pré-allumages d'un moteur à combustion interne, le système, qui comprend au moins un capteur (17) et une ligne de capteur (24) et un moyen d'évaluation de signal de capteur (20), étant soumis à un diagnostic afin de détecter une défaillance, **caractérisé en ce que**, lorsqu'une défaillance est détectée dans le système (17, 24, 20) par le diagnostic, un chemin habituel (26) incluant la détection de signal de capteur, l'évaluation de signal de capteur, la détection des pré-allumages et le lancement de contre-mesures contre les pré-allumages étant interrompu ou complètement ou partiellement désactivé et un chemin de sécurité (27) étant activé en tant que fonctionnement d'urgence, **en ce que** des mesures, qui empêchent de manière fiable l'apparition de pré-allumages dans le moteur à combustion interne (1), sont activées dans le chemin de sécurité (27) et **en ce qu'**une température dans une chambre de combustion du moteur à combustion interne (1) est abaissée pour empêcher l'apparition de pré-allumages.

2. Procédé selon la revendication 1, **caractérisé en ce que** la température dans la chambre de combustion du moteur à combustion interne (1) est abaissée par enrichissement en carburant dans le moteur à combustion interne (1).

3. Procédé selon la revendication 1, **caractérisé en ce que** la température dans la chambre de combustion du moteur à combustion interne (1) est abaissée par enrichissement en air dans le moteur à combustion interne (1).

4. Procédé selon la revendication 1, **caractérisé en ce que** la température dans la chambre de combustion du moteur à combustion interne (1) est réduite par diminution du remplissage du moteur à combustion interne (1) par réduction de l'alimentation en air.

5. Procédé selon la revendication 1, **caractérisé en ce que** la température dans la chambre de combustion du moteur à combustion interne (1) est réduite par réduction d'un gaz résiduel interne dans le moteur à combustion interne (1) par réduction des chevauchements des temps de commande d'une soupape d'admission (15) et d'une soupape de sortie (16) du moteur à combustion interne (1).

6. Procédé selon l'une au moins des revendications précédentes, **caractérisé en ce que** des niveaux de référence normalisés sont déterminés à partir du signal du capteur afin de diagnostiquer le capteur (17), lesquels niveaux sont comparés à une valeur seuil supérieure et une valeur seuil inférieure afin de détecter une défaillance, une défaillance étant détectée si le signal de capteur se trouve en dehors de la bande de signal formée par la valeur seuil supérieure et la valeur seuil inférieure.

7. Procédé selon l'une au moins des revendications précédentes, **caractérisé en ce qu'**un test de court-circuit est effectué pour diagnostiquer la ligne de capteur (24) et une défaillance est détectée s'il y a un court-circuit de la ligne de capteur (24) par rapport à une tension de batterie ou à la masse.

8. Procédé selon l'une au moins des revendications précédentes, **caractérisé en ce que** le diagnostic du moyen d'évaluation de signal de capteur (20) est effectué par surveillance du matériel informatique en ce qui concerne la détection de signal et l'évaluation de signal, une défaillance étant détectée si des invraisemblances se sont produites pendant la détection de signal ou l'évaluation de signal.

9. Procédé selon l'une des revendications 6, 7 ou 8, **caractérisé en ce que** la défaillance est mémorisée dans une mémoire de défaillances en vue de l'évaluation en atelier.

10. Dispositif de réglage d'un fonctionnement de secours en cas de défaillance d'un système de détection de pré-allumages dans un moteur à combustion interne, le système, qui comprend au moins un capteur (17) et au moins une ligne de capteur (24) et un moyen d'évaluation de signal de capteur (20), étant soumis à un diagnostic afin de détecter une défaillance, **caractérisé en ce que** des moyens (18, 25) sont prévus, lorsqu'une défaillance est détectée dans le système (17, 24, 20) par le diagnostic, pour interrompre ou désactiver complètement ou partiellement un chemin habituel (26) incluant la détection de signal de capteur, l'évaluation de signal de capteur, la détection des pré-allumages et le lancement de contre-mesures contre les pré-allumages, **en ce que** activer un chemin de sécurité (27) en tant que fonctionnement d'urgence, dans lequel des mesures, qui empêchent de manière fiable l'apparition de pré-allumages dans le moteur à combustion interne (1), sont activées et **en ce qu'**une température dans une chambre de combustion du moteur à combustion interne (1) est abaissée pour empêcher l'apparition de pré-allumages.

11. Dispositif selon la revendication 10, **caractérisé en ce que** les moyens comprennent un moyen de commande et d'évaluation (18) qui est destiné au moteur à combustion interne (1) et qui déclenche des signaux de diagnostic de l'au moins un capteur (17) et/ou de l'au moins une ligne de capteur (24) et/ou du moyen d'évaluation de signal de capteur (20) et qui évalue les signaux de réponse reçus en fonction de ces signaux, le chemin habituel (26) étant interrompu, lorsqu'une défaillance est détectée, afin de détecter des pré-allumages et le chemin de sécurité (27) étant activé.

12. Dispositif selon la revendication 10 ou 11, **caractérisé en ce que** le capteur (17) est un capteur de cliquetis disposé sur le cylindre du moteur à combustion interne (1), un capteur de pression disposé dans la chambre de combustion du moteur à combustion interne (1) ou un capteur de vitesse de rotation qui détecte la vitesse de rotation du vilebrequin du moteur à combustion interne (1).

13. Dispositif selon la revendication 10, 11 ou 12, **caractérisé en ce que** chaque cylindre du moteur à combustion interne (1) comporte comme actionneurs une soupape d'admission (15) destinée à l'admission d'air et une soupape de sortie (16) destinée à la sortie d'un gaz de combustion, les temps d'ouverture desdites soupapes étant réglés par un arbre à cames correspondant, le moyen de commande et d'évaluation (18) commandant l'arbre à cames de telle sorte que les temps d'ouverture des soupapes d'admission (15) et de sortie (16) ne se chevauchent pas ou ne se chevauchent que légèrement.
